# EUROPÄISCHE PATENTANMELDUNG

(11) **EP 1 867 830 A1**
(43) Veröffentlichungstag der Anmeldung: **19.12.2007**
(21) Anmeldenummer: 07011418.6
(22) Anmeldetag: 11.06.2007
(51) Int. Cl.: E21B 17/046, E21B 7/20, E21B 17/08, E21B 19/16

(54) **Hüllrohr**

(30) Priorität: 12.06.2006 DE 202006009320 U
(71) Anmelder: Minroc Bohrausrüstung Gmbh, 64823 Gross-Umstadt (DE)
(72) Erfinder: Stelke, Andreas, 64850 Schaafheim/Mosbach (DE); Wolter, Frank, 45527 Hattingen (DE); Rautenstrauch, Wolfgang, 45721 Haltern am See (DE)
(74) Vertreter: Griepenstroh, Jörg

(57) **Zusammenfassung**

Hüllrohr als Bestandteil einer Bohrvorrichtung, bei welcher das Hüllrohr hinter einer an einem Bohrgestänge befestigten Bohrkrone, das Bohrgestänge umgebend, in ein Bohrloch einziehbar ist, wobei das Hüllrohr über mehrere ineinander steckbare Rohrelemente (1, 2) verlängerbar ist, indem die Rohrenden der Rohrelemente (1, 2) als Muffenenden (3) und in die Muffenenden (3) eingreifende Spitzenden (4) ausgebildet sind, wobei die Rohrelemente (1, 2) durch eine radial nach innen gerichtete, zumindest bereichsweise Verpressung des Muffenendes (3) in dafür vorgesehene ringförmig umlaufende Außenrillen (9) des Spitzendes (4) formschlüssig, zugfest miteinander verbunden sind. Das unverpresste Muffenende (3) ist radial innenseitig mit Innenrillen (10) versehen, wobei die Innenrillen (10) und die korrespondierenden Außenrillen (9) jeweils eine im Längsschnitt durch das Rohrelement (1, 2) gezackte oder gewellte Profilierung aufweisen.

## Beschreibung

Die Erfindung betrifft ein Hüllrohr als Bestandteil einer Bohrvorrichtung gemäß den Merkmalen im Oberbegriff des Anspruchs 1.

Es ist bekannt, in Lockergesteinsstrecken sowohl das Jetting-Verfahren als das Rohrschirmverfahren einzusetzen. Vor dem Kalotten-Ausbruch wird beim Jetting-Verfahren ein "Schirm" im Lockergestein erstellt, der aus einzelnen Säulen besteht. Für diesen Schirm werden 30 oder mehr leicht nach oben geneigte und dicht aneinander gereihte Löcher von ca. 15 cm Durchmesser gebohrt. Beim Zurückziehen der Bohrrohre wird das Lockergestein unmittelbar mit einem Zementstrahl ausgefüllt, der unter hohem Druck steht. Somit besten die Jet-Säulen aus Beton und Zement. Sie schließen sich zu einem tragfähigen "Jet-Schirm", der einerseits die Stabilität des Hohlraums gewährleistet und andererseits die Arbeiter vor niederfallendem Gestein schützt. Das Rohrschirm-Verfahren ist mit dem Jetting-Verfahren vergleichbar. Auch der Rohrschirm wird vor dem Kalotten-Ausbruch im Lockergestein erstellt. Im Unterschied zu Jet-Schirm besteht der Rohrschirm aus Stahlrohren. Das Rohrschirm-Verfahren wird bei geringer Gebirgsüberdeckung oder beim Tunnelbau nahe unterhalb von Gebäuden, jedenfalls meistens in bindigen Böden angewendet. Ein Rohrschirm und eine Vorrichtung zur Herstellung eines Rohrschirms beim Vortrieb eines Tunnels ist in der DE 20 009 667 U1 beschrieben.

Die AT 408 472 B offenbart ein Verfahren und eine Einrichtung zum Bohren, insbesondere Schlag- oder Drehschlagbohren und Auskleiden von Löchern in Boden- oder Gesteinsmaterial, wobei durch eine schlagende und/oder drehende Bewegung einer an einem Bohrgestänge gelagerten Bohrkrone ein Bohrloch gebildet wird und mit der Vortriebsbewegung beim Bohren ein mit der Bohrkrone gekoppeltes und eine Auskleidung bildendes Hüllrohr durch Zugbeaufschlagung der Bohrkrone in axialer Richtung in das Bohrioch eingebracht wird. Nach Abschluss des Bohrvorgangs wird die Bohrkrone wenigstens teilweise gemeinsam mit dem Bohrgestänge aus dem Hüllrohr entfernt. Bei dieser Vorgehensweise kann sich die Bohrkrone relativ zum Hüllrohr drehbar bewegen. Die Verbindung der einzelnen Rohrelemente wird dabei lediglich auf Zug beansprucht. Nach dem Entfernen des Bohrgestänges und dem zentralen Teil der Bohrkrone wird in das Hüllrohr ein Anker eingebracht und/oder eine Verfüllung mit einem erhärtenden Material vorgenommen.

Es ist bekannt, die einzelnen Rohrelemente durch eine Gewindepaarung miteinander zu verbinden. Die Herstellung des Innen- und Außengewindes sowie das Verbinden der Rohrenden vor Ort ist relativ aufwendig und damit kostenintensiv. Bei Hüllrohren, die primär auf Zug beansprucht werden, steht ein derart hoher fertigungstechnischer Aufwand zur Herstellung einer Rohrverbindung in einem ungünstigen Verhältnis zur eigentlichen Funktion des Hüllrohrs.

In der DE 10 2004 020 065 B3 wird vorgeschlagen, dass die Rohrenden der Rohrelemente als Muffenenden und in die Muffenenden eingreifende Spitzenden ausgebildet sind, wobei die Rohrelemente durch eine radial nach innen gerichtete zumindest bereichsweise Verpressung des Muffenendes in dafür vorgesehene Vertiefungen des Spitzendes formschlüssig zugfest miteinander verbunden sind. Eine derartige Rohrverbindung ist mit einfachen technischen Mitteln vor Ort realisierbar. Es ist fertigungstechnisch lediglich erforderlich, den Außendurchmesser des Spitzendes auf den Innendurchmesser des Muffenendes abzustimmen und am Spitzende geeignete Vertiefungen vorzusehen, um das verpresste Material des Muffenendes aufzunehmen. Konkret wird vorgeschlagen, dass als Vertiefung mehrere Nuten an einem Spitzende vorgesehen sind, wobei die Nuten über die Länge eines Spitzendes gleichmäßig verteilt sind. Es sind nur sehr wenige aber dafür relativ tiefe Nuten vorgesehen, so dass es zum Verbinden der Rohrelemente erforderlich ist, genau diese Nuten zu treffen und die Verpressvorrichtung exakt an dem Muffenende zu positionieren. Obschon sich die erfindungsgemäße Rohrverbindung bewährt hat, ist bei der Verbindung zweier Rohrelemente eine gewisse Sorgfalt und Präzision erforderlich. Es wäre wünschenswert, wenn für den Fall der unsachgemäßen Handhabung der Verpressvorrichtung sichergestellt werden könnte, dass die Rohrelemente dennoch fest miteinander verbunden sind.

Der Erfindung liegt daher die Aufgabe zugrunde, ein Hüllrohr, das aus mehreren ineinandersteckbaren und einseitig miteinander verpressbaren Rohrelementen besteht, aufzuzeigen, dessen Rohrelemente rascher und zuverlässiger miteinander koppelbar sind.

Diese Aufgabe ist bei einem Hüllrohr mit den Merkmalen des Schutzanspruchs 1 gelöst.

Vorteilhafte Weiterbildungen des Erfindungsgedankens sind Gegenstand der Unteransprüche.

Das erfindungsgemäße Hüllrohr wird im Zusammenhang mit einer Bohrvorrichtung verwendet, bei welcher das Hüllrohr hinter einer an einem Bohrgestänge befestigten Bohrkrone, das Bohrgestänge umgebend und damit das Bohrloch auskleidend in das Bohrloch einziehbar ist. Das Hüllrohr kommt insbesondere beim Rohrschirmverfahren zum Einsatz, bei welchem die Hüllrohre nach dem Herausziehen des Bohrgestänges und zumindest von Teilen der Bohrkrone im Bohrloch verbleiben. Daher ist die Bohrkrone häufig zweiteilig aufgebaut und umfasst eine Innenkrone sowie eine ringförmige Außenkrone, an welcher das Hüllrohr gelagert sein kann. Das erste in die Bohrung eingezogene Rohrelement des Hüllrohrs wird als Anfangsrohr oder Pilot bezeichnet. Das Hüllrohr ist über mehrere ineinandersteckbare Rohrelemente verlängerbar, indem die Rohrenden der Rohrelemente als Muffenenden und in die Muffenenden eingreifende Spitzenden ausgebildet sind. Zusätzliche Verbinder zwischen den einzelnen Rohrelementen sind bei dieser Konfiguration nicht erforderlich.

Die Rohrelemente werden unmittelbar durch eine radial nach innen gerichtete zumindest bereichsweise Verpressung des Muffenendes, also durch plastische Umformung, in dafür vorgesehene ringförmig umlaufende Außenrillen des Spitzendes formschlüssig, zugfest miteinander verbunden. Wesentlich ist, dass das unverpresste Muffenende radial innenseitig mit Innenrillen versehen ist, wobei die Innenrillen und die korrespondierenden Außenrillen des Spitzendes jeweils eine im Längsschnitt durch das Rohrelement gezackte oder gewellte Profilierung aufweisen.

Gegenüber der Lösung der DE 10 2004 020 065 B3 ist bei dem erfindungsgemäßen Hüllrohr zusätzlich eine Profilierung am Muffenende vorgesehen. Diese Profilierung könnte man als Riffelung bezeichnen. Im Längsschnitt durch das Rohrelement sieht die Riffelung bevorzugt aus wie ein Gewinde, allerdings mit dem entscheidenden Unterschied, dass es sich bei der Riffelung um in einer Ebene umlaufende ringförmige Rillen handelt und nicht um eine Wendel. Ein schraubenlinienförmiger Verlauf hätte den Nachteil, dass sich miteinander verpresste Enden unbeabsichtigt losdrehen könnten. Zudem stellen die mit Außen- bzw. Innenrillen versehenen Muffenenden und Spitzenden keine Gewindepaarung dar, da die Rohrelemente in Axialrichtung ineinandersteckbar sind. Hierzu ist ein geringes radiales Spiel zwischen den Muffenenden und Spitzenden erforderlich.

An dem Muffenende und an dem Spitzende sind eine Vielzahl kleinerer Innenrillen und Außenrillen vorgesehen, wobei die Innenrillen unmittelbar benachbart sein sollten, so dass keine größeren Bereiche, insbesondere umlaufende Stege entstehen, in die kein Material verpressbar wäre. Vorzugsweise besitzen daher die Außenrillen und die Innenrillen die gleiche Teilung, das heißt der Abstand zwischen benachbarten Außenrillen entspricht dem Abstand zwischen zwei benachbarten Innenrillen. Eine optimale formschlüssige Verbindung lässt sich dann erreichen, wenn die Außenrillen und Innenrillen nicht nur die gleiche Teilung haben, sondern insgesamt gegengleich konfiguriert sind, so dass Außenrillen beim Verpressen vollständig durch das Material der Innenrillen ausgefüllt werden.

Als günstig wird es angesehen, wenn die Profilierung der Außenrillen sägezahnartig ist ebenso wie die Profilierung der Innenrillen in diesem Fall sägezahnartig ausgestaltet sein sollte. Unter einer sägezahnartigen Profilierung im Sinne der Erfindung ist eine Profilierung zu verstehen, bei welcher einzelne Zähne oder Zacken spitz vorstehen, und wobei sich ohne Lücke Zahn an Zahn anschließen.

Günstig ist es, wenn die sägezahnartige Profilierung als erste Flanke einen jeweils der Stirnseite des Rohrelements zugewandten Rillenrücken aufweist, der mit der Mittellängsachse des Rohrelements einen kleineren Winkel einschließt als die als Rillenbrust ausgebildete zweite Flanke. Die Zugbelastung zwischen den Rohrelementen wird über die Rillenbrust übertragen. Um ein Abgleiten der Rillenbrust des Außenprofils von der Rillenbrust des Innenprofils zu verhindern, ist es zweckmäßig, wenn der Winkel zwischen der Mittellängsachse und der Rillenbrust 90° beträgt. Im Gegensatz dazu kann der Winkel zwischen dem Rillenrücken und der Mittellängsachse des Rohrelements wesentlich kleiner sein und zwischen 20° und 60° betragen. Insbesondere ist ein Winkel von kleiner 30° zweckmäßig.

Bei derartig profilierten Innenrillen und Außenrillen kann das Spitzende leicht in das Muffenende eingeschoben werden, da auch bei einem Verkanten die Rillenrücken aneinander abgleiten. Das Herausziehen des Spitzendes aus dem Muffenende ist aufgrund des größeren Winkels zwischen der Rillenbrust und der Mittellängsachse, insbesondere wenn dieser 90° beträgt, wesentlich schwieriger, da sich das Spitzende gewissermaßen mit dem Muffenende verhakt. Um das Einführen des Spitzendes in das Muffenende zu erleichtern, können die Rohrenden stirnseitig leicht angefast sein, wobei die Anfasung unmittelbar in die erste Innenrille bzw. Außenrille übergeht.

Grundsätzlich kann die Zugfestigkeit der formschlüssigen Verbindung dadurch gesteigert werden, dass ein möglichst großflächiger Bereich des Muffenendes auf das Spitzende gepresst wird. Damit bei der Handhabung der Verpressvorrichtung keine Fehler gemacht werden können, ist es zweckmäßig, dass das Muffenende ebenso wie das Spitzende über seine gesamte Länge mit Innenrillen bzw. mit Außenrillen versehen ist. In diesem Fall spielt es keine Rolle, wo genau die Verpressung des Muffenendes erfolgt, da in jedem Fall ein Eingriff zwischen Muffenende und Spitzende stattfindet. Es ist aber auch denkbar, dass nur ein Teilbereich des Muffenendes bzw. des Spitzendes mit Innen- bzw. Außenrillen versehen ist. Um sicherzustellen, dass dennoch eine zuverlässige Verpressung des Muffenendes in die Außenrillen des Spitzendes erfolgt, sollten wenigstens 70 % der Länge des Muffenendes mit Innenrillen und wenigstens 70 % der Länge des Spitzendes mit Außenrillen versehen sein.

Um den Abtransport von Bohrklein nicht zu behindern, ist es zweckmäßig, wenn das mit der Bohrkrone verbundene Hüllrohr auf seinem der Bohrkrone abgewandten Ende ein Spitzende aufweist. Alle weiteren sich daran anschließenden Rohrelemente sind vorzugsweise identisch konfiguriert und besitzen jeweils ein Spitzende und ein Muffenende.

Die einander zugewandten mit Außen- und Innenrillen versehenen Kontaktbereiche der Spitzenden und der Muffenenden sind vorzugsweise konisch ausgebildet mit einem Konuswinkel in einem Bereich von 0,1° bis 3°, insbesondere in einem Bereich von 0,3° bis 1,0°. Die Teilung, das heißt der Abstand zwischen zwei einander benachbarten Innenrillen bzw. Außenrillen ist vorzugsweise kleiner als 10 mm, insbesondere kleiner als 5 mm. Beispielsweise wird bei einem Hüllrohr mit einem Außendurchmesser von 140 mm eine Teilnung von 3 mm als zweckmäßig angesehen. Bei einem Winkel des Rillenrückens von 26,5° ergibt sich eine Rillentiefe von 1,5 mm sowohl bei den Außenrillen als auch bei den Innenrillen. Diese Rillentiefe reicht aufgrund der Vielzahl von Rillen aus, um das Hüllrohr sicher hinter der Bohrkrone in das Bohrloch einziehen zu können.

Die Erfindung wird nachfolgend anhand des in den Zeichnungen dargestellten Ausführungsbeispiels näher erläutert. Es zeigen:
- Figur 1: ein erstes Rohrelement eines Hüllrohrs im Längsschnitt;
- Figur 2: ein weiteres Rohrelement eines Hüllrohrs im Längsschnitt sowie in Vergrößerung die Details A und B der Figur 2.

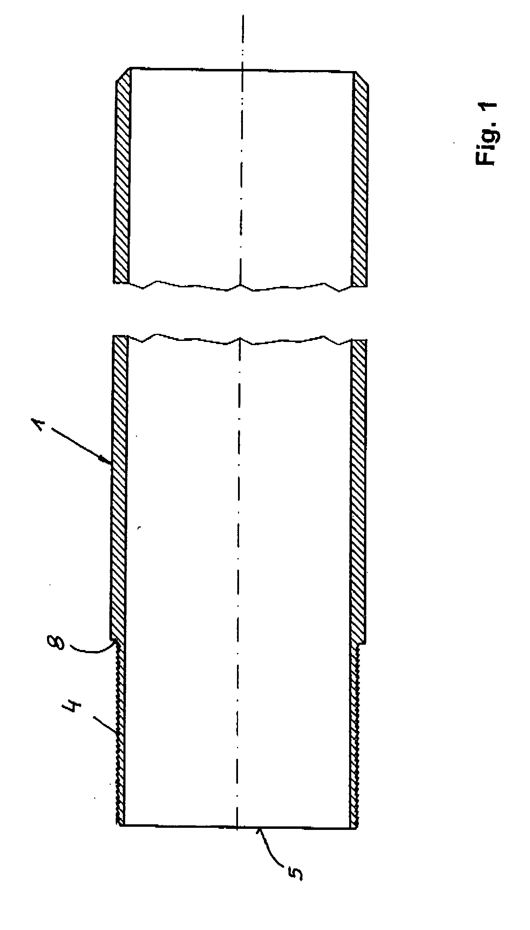

Figur 1 zeigt ein Rohrelement 1 eines Hüllrohrs. Das Hüllrohr ist Bestandteil einer Bohrvorrichtung, bei welcher das Hüllrohr hinter einer an einem Bohrgestänge befestigten Bohrkrone, das Bohrgestänge umgebend in ein Bohrloch eingezogen wird.

Die Bohrvorrichtung bzw. das Hüllrohr kommt insbesondere bei dem Vortrieb eines Tunnels unter Bildung eines Rohrschirms zum Einsatz. Das dargestellte Rohrelement 1 ist das erste Rohrelement des Hüllrohrs. Das Rohrelement 1 wird in nicht näher dargestellter Weise mit der Bohrkrone des Bohrgestänges gekoppelt. Beispielsweise kann an der in Bildebene rechten Stirnseite des dargestellten Rohrelements 1 eine ringförmige Außenkrone der Bohrkrone gelagert werden, die zusammen mit dem Rohrelement 1 nach Herstellen der Bohrung in dem Bohrloch verbleibt.

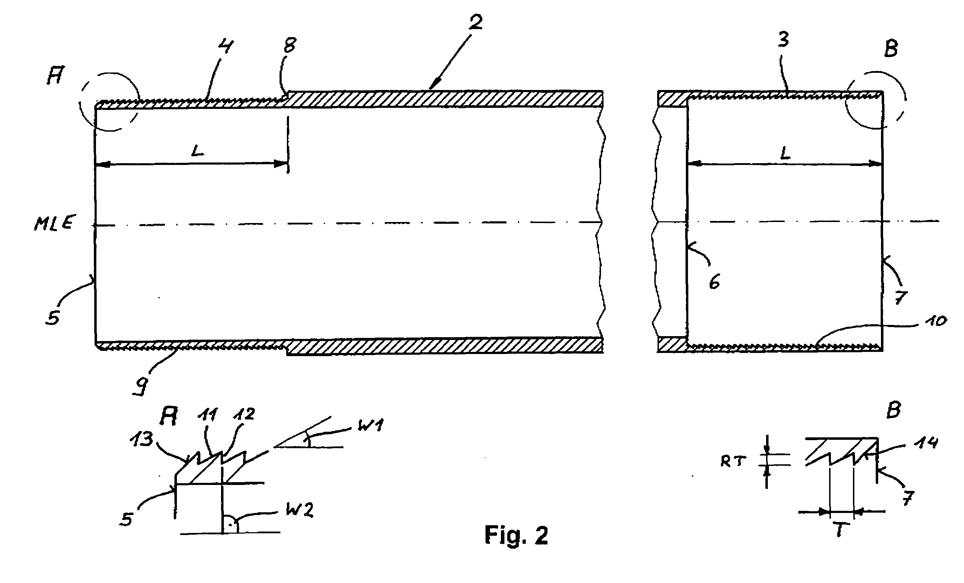

Das Besondere bei diesem Rohrelement 1 ist die Art und Weise, wie es mit nachfolgenden Rohrelementen 2, wie sie in Figur 2 dargestellt sind, verbunden werden kann. Die Rohrelemente 1, 2 werden miteinander formschlüssig durch Verpressen verbunden. Hierzu ist das in der Bildebene der Figur 2 rechte Rohrende als Muffenende 3 ausgeführt, das auf ein Spitzende 4 beispielsweise des Rohrelements 1 der Figur 1 aufsteckbar ist. Das Muffenende 3 und das Spitzende 4 sind in ihrer Länge L aufeinander abgestimmt, so dass die Stirnseite des Spitzendes 4 in der Einbaulage an einem inneren Ringkragen 6 des Muffenendes 3 anliegt und die Stirnseite 7 des Muffenendes 3 dem Ringkragen 8 des Spitzendes 4 benachbart ist.

Die einander zugewandten Kontaktflächen des Muffenendes 3 und des Spitzendes 4 sind konisch ausgebildet und besitzen in diesem Ausführungsbeispiel einen Konuswinkel von kleiner 1,0°. Die radial innen liegende Kontaktfläche des Muffenendes 3 ist über ihre gesamte Längserstreckung mit Innenrillen 10 versehen, während das Spitzende an seinem Außenumfang mit Außenrillen 9 versehen ist. Die Detaildarstellungen A, B in Figur 2 verdeutlichen, dass es sich bei den Außenrillen 9 bzw. den Innenrillen 10 um ein sägezahnartiges Profil handelt. Jede dieser sägezahnartigen Profilierungen weist als erste Flanke einen jeweils der Stirnseite 5, 7 des Rohrelements 2 zugewanden Rillenrücken 11 auf, der mit der Mittellängsachse MLE des Rohrelements 2 einen kleineren Winkel W1 einschließt als die als Rillenbrust 12 ausgebildete zweite Flanke, die mit der Mittellängsachse MLE einen Winkel W2 von 90° einschließt. In diesem Ausführungsbeispiel beträgt der zwischen zwei Zahnspitzen gemessene Abstand 3 mm, bei einer Rillentiefe RT 1,5 mm. Folglich ergibt sich ein Winkel W1 von ca. 26,6°. Anhand der Darstellungen A und B ist auch zu erkennen, dass die stirnseitige Anfasung des Muffenendes 3 bzw. des Spitzendes 4 mit einem größeren Winkel erfolgt. Der Winkel der Anfasungen 13, 14 beträgt in diesem Ausführungsbeispiel 45°.

Während das Rohrelement 1 der Figur 1 eine Gesamtlänge von ca. 2.200 mm hat zuzüglich 130 mm für die Bohrkrone, besitzen die nachfolgenden Rohrelemente gemäß Figur 2 eine Gesamtlänge von ca. 3.100 mm bei einem Außendurchmesser von ca. 140 mm. Die Muffenenden bzw. Spitzenden erstrecken sich über jeweils ca. 100 mm.

Das nicht näher dargestellte Verpressen des Muffenendes 3 auf das Spitzende 4 des benachbarten Rohrelements 1, 2 kann in einem beliebigen Umfangsbereich des Muffenendes 3 bzw. des Spitzendes 4 erfolgen. Es ist in jedem Fall sichergestellt, dass die miteinander zu verbindenden Rohrelemente 1, 2 formschlüssig in Eingriff gelangen und daher zugfest miteinander verbunden sind.

### Bezugszeichen :

- 1 -: Rohrelement
- 2-: Rohrelement
- 3-: Muffenende
- 4-: Spitzende
- 5 -: Stirnseite
- 6 -: Ringkragen
- 7-: Stirnseite
- 8 -: Ringkragen
- 9 -: Außenrillen
- 10-: Innenrillen
- 11-: Rillenrücken
- 12 -: Rillenbrust
- 13 -: Fase
- 14 -: Fase

- L -: Länge v. 3, 4
- MLE -: Mittellängsebene
- W1-: Winkel
- W2 -: Winkel
- RT -: Rillentiefe
- T -: Teilung

## Patentansprüche

1. Hüllrohr als Bestandteil einer Bohrvorrichtung, bei welcher das Hüllrohr hinter einer an einem Bohrgestänge befestigten Bohrkrone, das Bohrgestänge umgebend, in ein Bohrloch einziehbar ist, wobei das Hüllrohr über mehrere ineinander steckbare Rohrelemente (1, 2) verlängerbar ist, indem die Rohrenden der Rohrelemente (1, 2) als Muffenenden (3) und in die Muffenenden (3) eingreifende Spitzenden (4) ausgebildet sind, wobei die Rohrelemente (1, 2) durch eine radial nach innen gerichtete, zumindest bereichsweise Verpressung des Muffenendes (3) in dafür vorgesehene ringförmig umlaufende Außenrillen (9) des Spitzendes (4) formschlüssig, zugfest miteinander verbunden sind, **dadurch gekennzeichnet, dass** das unverpresste Muffenende (3) radial innenseitig mit Innenrillen (10) versehen ist, wobei die Innenrillen (10) und die korrespondierenden Außenrillen (9) jeweils eine im Längsschnitt durch das Rohrelement (1, 2) gezackte oder gewellte Profilierung aufweisen.

2. Hüllrohr nach Anspruch 1, **dadurch gekennzeichnet, dass** der Abstand zwischen benachbarten Außenrillen (9) dem Abstand zwischen zwei benachbarten Innenrillen (10) entspricht.

3. Hüllrohr nach Anspruch 1 oder 2, **dadurch gekennzeichnet, dass** die Profilierung der Außenrillen (9) sägezahnartig ist.

4. Hüllrohr nach einem der Ansprüche 1 bis 3, **dadurch gekennzeichnet, dass** die Profilierung der Innenrillen (10) sägezahnartig ist.

5. Hüllrohr nach Anspruch 3 oder 4, **dadurch gekennzeichnet, dass** die sägezahnartige Profilierung als erste Flanke einen jeweils der Stirnseite (5, 7) des Rohrelements (1, 2) zugewandten Rillenrücken (11) aufweist, der mit der Mittellängsachse (MLE) des Rohrelements (1, 2) einen kleineren Winkel (W1) einschließt als die als Rillenbrust (12) ausgebildete zweite Flanke.

6. Hüllrohr nach Anspruch 4, **dadurch gekennzeichnet, dass** der Winkel (W2) zwischen der Mittellängsache (MLE) und der Rillenbrust (12) 90° beträgt.

7. Hüllrohr nach Anspruch 5, **dadurch gekennzeichnet, dass** der Winkel (W1) zwischen dem Rillenrücken (11) und der Mittellängsache (MLE) des Rohrelements (1, 2) zwischen 20° und 60° beträgt.

8. Hüllrohr nach einem der Ansprüche 1 bis 7, **dadurch gekennzeichnet, dass** wenigstens 70% der Länge des Muffenendes (3) mit Innenrillen (10) und wenigstens 70% der Länge des Spitzendes (4) mit Außenrillen (9) versehen sind.

9. Hüllrohr nach einem der Ansprüche 1 bis 8, **dadurch gekennzeichnet, dass** das Muffenende (3) über seine gesamte Länge (L) mit Innenrillen (10) und das Spitzende (4) über seine gesamte Länge (L) mit Außenrillen (9) versehen ist.

10. Hüllrohr nach einem der Ansprüche 1 bis 9, **dadurch gekennzeichnet, dass** das mit der Bohrkrohne verbundene Hüllrohr auf seinem der Bohrkrone angewandten Ende ein Spitzende (4) aufweist.
